# EUROPÄISCHE PATENTSCHRIFT

(11) **EP 0 653 366 B1**
(45) Veröffentlichungstag und Bekanntmachung des Hinweises auf die Patenterteilung: **01.04.1998**
(21) Anmeldenummer: 94117731.3
(22) Anmeldetag: 10.11.1994
(51) Int. Cl.: B65G 53/52, B65G 53/66, B08B 9/02

(54) **Verfahren und Vorrichtung zum Freiblasen von Förderleitungen**
Method of and device for cleaning conveyor pipelines by blowing
Procédé et dispositif pour nettoyer des tuyauteries de transport par soufflage

(30) Priorität: 15.11.1993 DE 4338965
(43) Veröffentlichungstag der Anmeldung: 17.05.1995
(73) Patentinhaber: ZEPPELIN SCHÜTTGUTTECHNIK GmbH, D-88250 Weingarten (DE)
(72) Erfinder: Krambrock, Wolfgang, D-88267 Vogt (DE); Wilms, Harald, D-88069 Tettnang (DE)
(74) Vertreter: Patentanwälte Eisele, Otten & Roth

(56) Entgegenhaltungen:
- CH-A- 436 120
- DE-A- 3 820 710
- DE-B- 2 334 360
- DE-U- 7 129 735

## Beschreibung

Die Erfindung betrifft ein Verfahren und eine Vorrichtung zum Freiblasen von Förderleitungen nach den Oberbegriffen der Ansprüche 1 und 6, wie sie z.B. aus der DE-A-3 820 710 bekannt sind.

In vielen Bereichen der Verfahrenstechnik, insbesondere bei der pneumatischen Förderung von Schüttgütern, besteht die Notwendigkeit, nach Beendigung des Fördervorganges sowie bei Produktwechsel die Förderleitung von Reststoffen, d.h. restlichem Produkt oder Staub, zu reinigen. Dies wird in der Regel durch Freiblasen der Leitung erzielt. Zum Freiblasen wird eine größere Gasgeschwindigkeit und somit eine größere Gasmenge benötigt. Da sich jedoch nur geringe Mengen in der Förderleitung befinden, ist nur noch ein sehr viel geringerer Druck zum Freiblasen erforderlich. Dieser geringere Druck wird, insbesondere bei fast vollständig sauberer Leitung am Ende des Reinigungszyklus, im wesentlichen vom Leitungswiderstand bei der Durchströmung mit einer reinen Gasströmung bestimmt. Diese größere Gasmenge bei niedrigerem Druck kann häufig nicht vom Verdichter zur Verfügung gestellt werden oder soll nicht direkt aus einem Druckluftnetz entnommen werden.

Üblicherweise wird hierzu ein weiteres Gebläse eingesetzt, das für die größere Gasmenge und den geringeren Druck ausgelegt ist. Dieses Gebläse wird ausschließlich zum Freiblasen der Leitung verwendet und stellt somit eine zusätzliche Investition für die Gebläseeinheit, die dazugehörige Steuerung sowie die Betriebs- und Wartungskosten dar.

Der Erfindung liegt daher die Aufgabe zugrunde, ein Verfahren und eine Vorrichtung zum Freiblasen von Förderleitungen vorzuschlagen, bei dem ein zusätzliches Gebläse zum Freiblasen der Leitung nicht mehr notwendig ist. Beeinträchtigungen beim Freiblasen der Leitung sollen hierbei vermieden werden.

Diese Aufgabe wird ausgehend von einem Verfahren und einer Vorrichtung zum Freiblasen von Förderleitungen der einleitend genannten Art durch die kennzeichnenden Merkmale der Ansprüche 1 und 6 gelöst.

Durch die in den Unteransprüchen genannten Merkmale sind vorteilhafte Ausführungen und Weiterbildungen der Erfindung möglich.

Demgemäß wird bei einem erfindungsgemäßen Verfahren der höhere Druck des Verdichters, der bei der Förderung von Schüttgütern als Förderdruck zur Verfügung steht, als Treibdruck zum Ansaugen von zusätzlichem Gas, z. B. Luft, über einen Injektor beim Freiblasen verwendet. Der zum Freiblasen zur Verfügung stehende Gasvolumenstrom wird hierdurch größer als der vom Verdichter erzeugte Druckluftstrom. Gleichzeitig wird der Druck herabgesenkt, so daß die notwendigen Bedingungen für den Freiblasvorgang gegeben sind.

Die Vorrichtung zur Durchführung dieses Verfahrens zeichnet sich dadurch aus, daß eine Luftmengenregeleinheit, insbesondere mit einer oder mehreren Lavaldüsen, vorgesehen wird, die parallel zu dem Injektor geschaltet wird. Außerdem werden geeignete Absperrorgane angebracht, so daß die Druckluft entweder über die eine oder mehrere Lavaldüsen oder den Injektor strömt, so daß bei der Strömung über den Injektor eine zusätzliche Luftmenge zur Vergrößerung des Luftvolumenstroms aus der Umgebungsluft oder einem Gasvorratsbehälter angesogen wird.

Durch eine derartige Anordnung ist die Größe des Luftvolumenstroms über die Absperrorgane regelbar, so daß sowohl für die Förderung der Schüttgüter als auch für das Freiblasen des Verdichters der Luftvolumenstrom und die Größe des Luftdrucks eingestellt werden können.

Falls ein Druckluftnetz vorhanden ist, kann bei einem erfindungsgemäßen Verfahren bzw. bei einer Apparatur zur Durchführung dieses Verfahrens die Druckluft statt von dem Verdichter aus dem Druckluftnetz entnommen werden.

Anstelle von Druckluft kann auch ein anderes Gas aus einem entsprechenden Gasvorratsbehälter, insbesondere Stickstoff oder Kohlendioxid, verwendet werden. Dies ist insbesondere dann von Vorteil, wenn Luft und Schüttgut ein reaktives Gemisch ergeben, beispielsweise bei brennbarem oder explosiven Material, oder ein Schutzgas zur Verhinderung von Feuchtigkeitsübertragung oder Produktveränderungen verwendet wird.

In einer besonderen Ausführungsform kann ein bei der Verwirklichung der Erfindung verwendetes Druckluftnetz auch aus mehreren Verdichtern gespeist werden, die zusammen genügend Druckluft zur Förderung, aber nicht zum gleichzeitigen Freiblasen der Leitung erzeugen. Ohne einen erfindungsgemäßen Injektor wäre auch bei der Verwendung mehrerer Verdichter in einem Druckluftnetz wenigstens ein zusätzliches Gebläse zum Freiblasen notwendig, um den Gasvolumenstrom entsprechend zu erhöhen.

Vorteilhafterweise liegt der Förderdruck der Druckluft zur pneumatischen Förderung von Schüttgütern über 1,5 bar, wobei die Geschwindigkeit des Gasvolumenstroms beim Freiblasen zwischen 15 und 35 m/sec. liegt. In weiteren Ausführungen sind jedoch ohne weiteres auch Förderdrücke und Geschwindigkeiten außerhalb der genannten Bereiche möglich.

Für den Fall, daß mehrere Fördersysteme vorhanden sind, empfiehlt es sich, die Lavaldüsen- und Injektorstationen zu einer modulartigen Einheit zusammenzufassen.

Hierbei kann die Versorgung mit Luft bzw. Gas der verschiedenen Injektoren über eine gemeinsame Leitung mit einem gemeinsamen Ansaugfilter erfolgen.

Ein Ausführungsbeispiel der Erfindung ist in der Zeichnung dargestellt und wird anhand der nachfolgenden Beschreibung naher erläutert.

Im einzelnen zeigen
- Fig. 1: einen Schaltplan einer erfindungsgemäßen Vorrichtung zum Freiblasen von Förderleitungen,
- Fig. 2: einen Schaltplan einer derartigen Vorrichtung mit mehreren Verdichtern und Förderleitungen
- Fig. 3: einen Schaltplan einer Vorrichtung mit modulartig zusammengefaßten Injektorstationen.

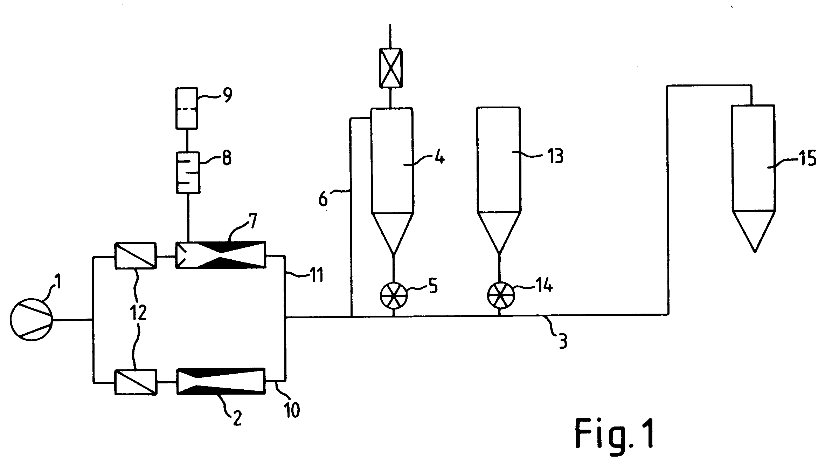

In Fig. 1 ist ein Verdichter 1 dargestellt, der über eine Lavaldüse 2 mit einer pneumatischen Förderleitung 3 verbunden ist. In der Förderleitung 3 werden Schüttgüter gefördert, die in einem Silo 4 gelagert sind. Das Silo 4 ist über ein Zuteilorgan 5 mit der Förderleitung 3 verbunden. Falls das Silo 4 mit der Außenluft, d.h. mit dem normalen Atmosphärendruck, in Verbindung steht, empfiehlt es sich, das Zuteilorgan 5 als Zellenradschleuse auszubilden. Es ist jedoch auch möglich, das Silo 4 über eine Verbindungsleitung 6 mit dem Förderdruck der Förderleitung 3 zu beaufschlagen. In diesem Fall kann als Zuteilorgan 5 anstatt einer Zellenradschleuse auch ein gewöhnliches Absperrorgan eingesetzt werden. Zwischen Verdichter 1 und Förderleitung 3 ist zu der als Luftmengenregler fungierenden Lavaldüse 2 ein Injektor 7 parallel geschaltet. Dieser Injektor 7 steht über einen Schalldämpfer 8 und ein Ansaugfilter 9 mit der Außenluft oder einem entsprechenden Gastank in Verbindung.

Der Injektor 7 und die Lavaldüse 2 sind über parallel geführte Leitungen 10, 11 mit der Förderleitung 3 verbunden. Dem Injektor 7 und der Lavaldüse 2 ist jeweils eine Absperrklappe 12 vorgeschaltet.

Im vorliegenden Ausführungsbeispiel ist außer dem Silo 4 noch ein weiteres Silo 13 mit einer zusätzlichen Zellenradschleuse 14 an die Förderleitung 3 gekoppelt, an deren Ende sich ein Empfangsbehälter 15 befindet.

Bei der pneumatischen Förderung, insbesondere der Dichtstrom- oder Langsamförderung, wird zum Fördern ein von der Leitungsführung und Länge sowie dem Produktmengenstrom und dem Produkt abhängiger Gasvolumenstrom und Förderdruck benötigt. Dieser Gasvolumenstrom wird bei einer Vorrichtung gemäß Fig. 1 direkt vom Verdichter 1 geliefert. Anschließend erfolgt eine Regelung der Gasmenge über die Lavaldüse 2. Mit dem so zur Verfügung gestellten Gasvolumenstrom wird ein bestimmter Schüttgutmengenstrom durch die pneumatische Förderleitung 3 aus dem Silo 4 in den Empfangsbehälter 15 gefördert. Die Einspeisung der Schüttgüter in die Förderleitung 3 aus dem Silo 4 wird hierbei über ein entsprechendes Zuteilorgan 5 bewerkstelligt. Je nachdem, ob das Silo 4 über die Verbindungsleitung 6 mit dem Förderdruck beaufschlagt ist oder nicht, stellt das Zuteilorgan 5 eine Zellenradschleuse oder ein gewöhnliches Absperrorgan dar.

Nach Beendigung des Fördervorganges muß die Förderleitung 3 von Resten an Schüttgut sowie von Staub gereinigt werden.

Hier wird, wie oben angeführt eine größere Gasmenge bei niedrigerem Druck benötigt, die nicht direkt vom Verdichter 1 zur Verfügung gestellt werden kann.

Daher wird der höhere Druck des Verdichters 1 dazu benutzt, um über den Injektor 7, der über den Schalldämpfer 8 und das Ansaugfilter 9 Gas ansaugt, den Gasvolumenstrom ohne weiteres Gebläse zum Freiblasen der Förderleitung zu erhöhen. Um den vollen Druck und Gasvolumenstrom des Verdichters 1 als Treibdruck für den Injektor nutzen zu können, wird der während der Förderung über den Leitungsteil 10 strömende Gasvolumenstrom ebenfalls mit über dem Injektor 7 und die parallel geführte Leitung 11 geleitet, wozu die Absperrklappen 12 in entsprechender Weise geschlossen und geöffnet werden.

Nach Beendigung des Reinigungsvorgangs werden die Absperrklappen 12 wieder in ihre Ausgangsposition geschaltet, so daß ein erneuter Fördervorgang, beispielsweise mit einem weiteren Produkt aus dem zusätzlichen Silo 13 über die zusätzliche Zellenradschleuse 14 durchgeführt werden kann.

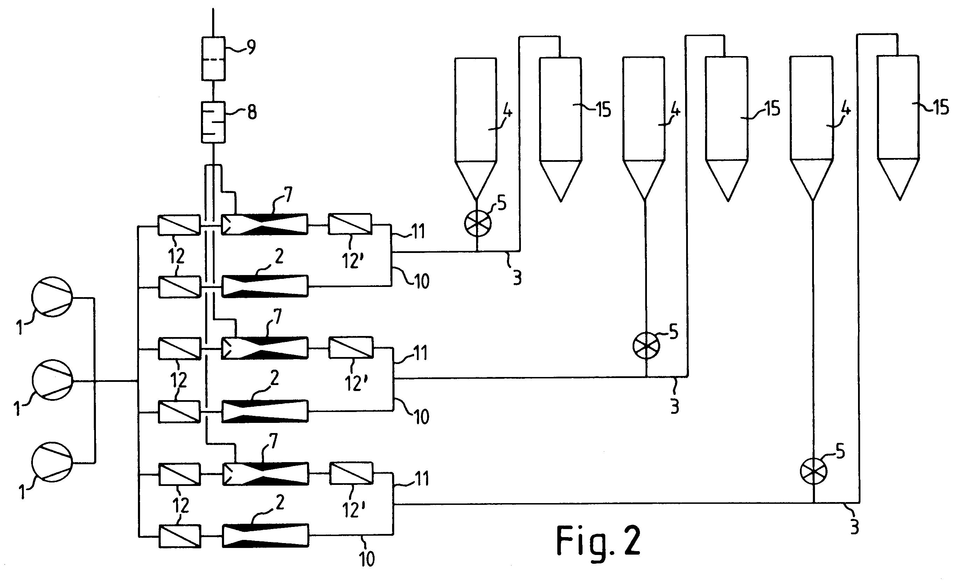

In der Anordnung gemäß Fig. 2 sind drei Verdichter 1 vorgesehen, die in diesem Fall insgesamt sechs verschiedene parallel abgezweigte Leitungen 10, 11 mit Druckluft versorgen, die in drei verschiedene Förderleitungen 3 münden. Drei Leitungen 10 der genannten sechs Leitungen werden hierbei über Lavaldüsen 2 als Mengenregelelement für den Gasstrom während der Förderung von Schüttgut aus jeweils einem Silo 4 geleitet. Zum Reinigen der verschiedenen Förderleitungen 3, die jeweils in einem eigenen Empfangsbehälter 15 münden, ist in den drei Leitungen 11 jeweils ein Injektor 7 vorgesehen. Die Ansaugleitungen der Injektoren 7 werden zusammengeführt und münden gemeinsam in den Schalldämpfer 8, dem wiederum ein Ansaugfilter 9 vorgeschaltet ist.

Gegenüber dem erstgenannten Ausführungsbeispiel sind weitere Absperrklappen 12' in Strömungsrichtung hinter den Injektoren 7 vorgesehen. Diese dienen dazu, die verschiedenen Förderleitungsstränge auch dann voneinander abzukoppeln, wenn in einer Förderleitung Schüttgüter gefördert, in einer anderen jedoch ausgeblasen wird. Ohne diese zusätzlichen Absperrklappen 12' könnte bei Ausblasen einer Förderleitung 3 über die Verbindung der beiden Injektoren 7 durch die gemeinsame Ansaugleitung zum Schalldämpfer 8 ein entsprechender Gasstrom der zweiten Förderleitung zugeführt werden, die gerade Schüttgut befördert. Dies wäre natürlich unerwünscht und kann durch die zusätzliche Absperrklappe 12' verhindert werden.

Die dargestellte Anordnung wird in der oben zu Fig. 1 genannten Weise betrieben, wobei nunmehr drei verschiedene Förderleitungen Schüttgüter aus drei verschiedenen Silos in drei verschiedene Empfangsbehälter 15 fördern.

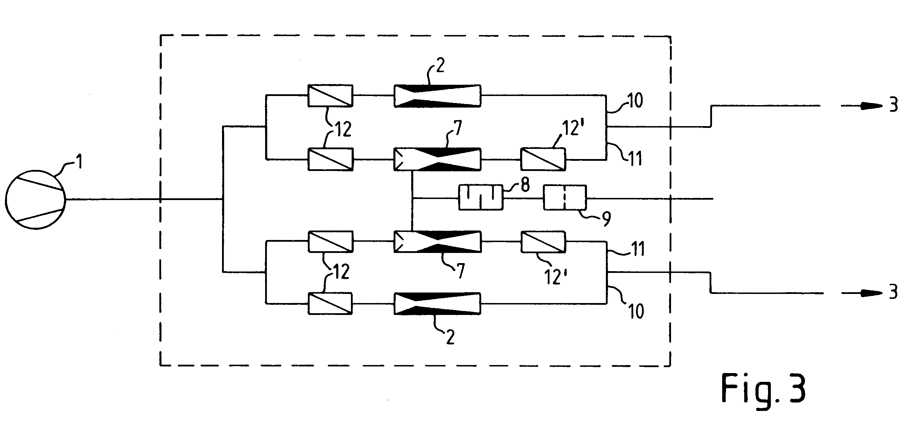

In Fig. 3 ist durch ein Rechteck mit gestrichelten Linien ein modulartiger Aufbau einer erfindungsgemäßen Vorrichtung angedeutet. Als Eingang sind eine Druckgasleitung vom Verdichter 1 sowie eine Ansaugleitung zum Ansaugfilter 9 vorgesehen. Den Ausgang der modulartigen Einheit bilden zwei Förderleitungen 3. Der Druckgasstrom aus dem Verdichter 1 wird innerhalb des Moduls auf zwei parallele Schaltkreise verteilt, die jeweils aus einem Zweig 10 mit Lavaldüse 2 und einem weiteren Zweig 11 mit Injektor 7 bestehen. Die Ansaugleitung der Injektoren 7 münden über eine Sammelleitung wieder in einen gemeinsamen Schalldämpfer und ein gemeinsames Ansaugfilter.

Wie im Ausführungsbeispiel gemäß Fig. 2 sind in Strömungsrichtung hinter den Injektoren 7 gegenüber dem erstgenannten Ausführungsbeispiel weitere Absperrklappen 12' zur vollständigen Abkopplung der beiden Förderleitungsstränge vorgesehen.

## Patentansprüche

1. Verfahren zum Freiblasen von Förderleitungen, insbesondere von Förderleitungen (3) für pneumatische Langsamförderung von Schüttgütern, dadurch gekennzeichnet, daß zum Freiblasen der Druck des Verdichters (1) als Treibdruck zum Ansaugen von zusätzlicher Luft aus der Umgebung über einen Injektor (7) verwendet wird, wodurch der zum Freiblasen zur Verfügung stehende Gasvolumenstrom größer wird als der vom Verdichter (1) erzeugte Druckluftstrom.

2. Verfahren nach Anspruch 1, dadurch gekennzeichnet, daß die Druckluft statt von einem Verdichter aus einem Druckluftnetz entnommen wird.

3. Verfahren nach einem der Ansprüche 1-2, dadurch gekennzeichnet, daß statt der Druckluft auch ein anderes Gas verwendet wird, insbesondere Stickstoff oder Kohlendioxid.

4. Verfahren nach einem der Ansprüche 1-3, dadurch gekennzeichnet, daß das Druckluftnetz aus mehreren Verdichtern gespeist wird, die zusammen genügend Druckluft zur Förderung, aber nicht zum gleichzeitigen Freiblasen erzeugen.

5. Verfahren nach einem der Ansprüche 1-4, dadurch gekennzeichnet, daß der Förderdruck größer als 1,5 bar und die Geschwindigkeit beim Freiblasen zwischen 15 und 25 m/s liegt.

6. Apparatur zur Realisierung des Verfahrens nach einem der Ansprüche 1-4, dadurch gekennzeichnet, daß eine Luftmengenregeleinheit (2), insbesondere eine oder mehrere Lavaldüsen, parallel zu einem Injektor (7) geschaltet wird und daß über geeignete Absperrorgane (12) entweder die Druckluft über die Luftmengenregeleinheit (2) oder den Injektor (7) strömt, so daß bei der Strömung über den Injektor eine zusätzliche Luftmenge zur Vergrößerung des Luftvolumenstroms aus der Umgebung angesogen wird.

7. Apparatur nach Anspruch 6, dadurch gekennzeichnet, daß statt Luft ein anderes Gas, insbesondere Stickstoff oder Kohlendioxid, verwendet wird.

8. Apparatur nach einem der Ansprüche 6,7, dadurch gekennzeichnet, daß für mehrere Fördersysteme die Lavaldüsen- und Injektorstationen zu einer Einheit zusammengefaßt werden, wobei die Versorgung mit Luft bzw. Gas über ein gemeinsamen Ansaugfilter erfolgt.

## Claims

1. Method for blowing free conveyor pipes, in particular conveyor pipes (3) for the pneumatic slow transportation of loose bulk materials, characterised in that for the blowing the pressure of a compressor (1) is used as swelling pressure to suction additional air from the environment via an injector (7), whereby the flow of gas available for blowing is greater than the flow of compressed air produced by the compressor (1).

2. Method according to Claim 1, characterised in that the compressed air is taken from a compressed air ductwork system instead of from a compressor.

3. Method according to one of Claims 1-2, characterised in that instead of compressed air a different gas is used, in particular nitrogen or carbon dioxide.

4. Method according to one of Claims 1-3, characterised in that the compressed air ductwork system is supplied by several compressors which together produce sufficient compressed air for transportation but not for simultaneous blowing.

5. Method according to one of Claims 1-4, characterised in that the transport pressure is greater than 1.5 bar and the speed when blowing is between 15 and 25 m/s.

6. Apparatus for performing the method according to one of Claims 1-4, characterised in that an air volume control unit (2), in particular one or several Laval nozzles, is connected parallel to an injector (7), and the compressed air flows via suitable shut-off devices (12) either via the air volume control unit (2) or the injector (7), so that in the case of flow via the injector an additional amount of air is suctioned from the environment to increase the flow of air.

7. Apparatus according to Claim 6, characterised in that instead of air a different gas, in particular nitrogen or carbon dioxide, is used.

8. Apparatus according to one of Claims 6 - 7, characterised in that with several conveyor systems the Laval nozzles and injector stations are combined into a single unit, in which the air or gas is supplied through a joint suction filter.

## Revendications

1. Procédé pour le nettoyage par soufflage de tuyaux de transport, notamment de tuyaux de transport (3) destinés au transport pneumatique lent de matières en vrac, caractérisé en ce que, pour le nettoyage par soufflage, on utilise la pression du compresseur (1) comme pression d'entraînement afin d'aspirer par l'intermédiaire d'un injecteur (7) de l'air supplémentaire provenant de l'environnement, le flux volumique de gaz disponible pour le nettoyage par soufflage devenant alors supérieur au flux d'air comprimé produit par le compresseur (1).

2. Procédé selon la revendication 1, caractérisé en ce que l'on tire l'air comprimé non d'un compresseur mais d'un réseau d'air comprimé.

3. Procédé selon l'une des revendications 1 et 2, caractérisé en ce que l'on utilise au lieu de l'air comprimé un autre gaz, en particulier de l'azote ou du dioxyde de carbone.

4. Procédé selon l'une des revendications 1 à 3, caractérisé en ce que l'on alimente le réseau d'air comprimé à partir de plusieurs compresseurs qui produisent ensemble suffisamment d'air comprimé pour le transport mais pas pour le nettoyage par soufflage simultané.

5. Procédé selon l'une des revendications 1 à 4, caractérisé en ce que la pression de transport est supérieure à 1,5 bar et la vitesse lors du nettoyage par soufflage est comprise entre 15 et 25 m/s.

6. Dispositif pour la mise en oeuvre du procédé selon l'une des revendications 1 à 4, caractérisé en ce qu'une unité régulatrice de quantité d'air (2), notamment une ou plusieurs tuyères Laval, est branchée en parallèle avec un injecteur (7) et l'air comprimé s'écoule par l'intermédiaire d'organes d'obturation (12) appropriés soit par l'unité régulatrice de quantité d'air (2) soit par l'injecteur (7) de telle sorte que, lors de l'écoulement par l'injecteur, une quantité d'air supplémentaire est aspirée de l'environnement afin d'augmenter le flux volumique d'air.

7. Dispositif selon la revendication 6, caractérisé en ce que, au lieu de l'air, un autre gaz, en particulier de l'azote ou du dioxyde de carbone, est utilisé.

8. Dispositif selon l'une des revendications 6 et 7, caractérisé en ce que, pour plusieurs systèmes de transport, les postes de tuyères Laval et d'injecteurs sont regroupés en une unité, l'alimentation en air ou en gaz s'effectuant par l'intermédiaire d'un filtre d'aspiration commun.
